# EUROPEAN PATENT SPECIFICATION

(11) **EP 4 192 910 B1**
(45) Date of publication and mention of the grant of the patent: **28.08.2024**
(21) Application number: 21749794.0
(22) Date of filing: 23.07.2021
(51) Int. Cl.: C08L 7/00, B60C 1/00, C08L 71/03, C08C 19/06

(54) **BODY PLY SKIM COMPOUND**
ZUSAMMENSETZUNG ZUR SKIPLAGE-SKIMMING
COMPOSÉ POUR L'ÉCRÉMAGE DE LA NAPPE CARCASSE

(30) Priority: 07.08.2020 IT 202000019702
(43) Date of publication of application: 14.06.2023
(73) Proprietor: Bridgestone Europe NV/SA, 1930 Zaventem (BE)
(72) Inventor: FIORENZA, Paolo, 00128 Rome (IT)
(74) Representative: Marchetti, Alessio
(86) International application number: PCT/EP2021/070679
(87) International publication number: WO 2022/028923

(56) References cited:
- EP-A1- 0 604 834
- EP-A1- 1 661 946
- EP-A1- 3 260 499
- EP-A1- 3 433 312
- CN-A- 104 592 593
- CN-A- 106 674 637

## Description

The present invention relates to a body ply skim compound whose impermeability characteristics thereof allow for a drastic reduction in the thickness of the innerliner layer, if not the complete elimination thereof.

The innerliner layer refers to the inner rubber layer that is used in tubeless pneumatic tyres in order to maintain the pressure of the air within the carcass.

Generally, the compounds for making the innerliner are made with a rubber matrix resulting from a halogenated isobutylene/isoprene copolymer.

As is widely known, in the pneumatic tyre industry there is an increasing need to reduce rolling resistance. One way to achieve this is by reducing the weight of the pneumatic tyre. In regard to this, an attempt is being made to reduce the thickness of those rubber layers that comprise the various parts of the pneumatic tyre without, however, this affecting the functionality thereof. One of the parts of the pneumatic tyre that this type of research focuses on is the innerliner. EP3433312A1 describes a body ply skim composition comprising a cross-linkable unsaturated chain polymer base, e.g. an epoxidized natural rubber and natural rubber, a filler, e.g. carbon black, and a vulcanization system, wherein said composition further comprises a polyepihalohydrin rubber and a laminated structure material, e.g. clay , as a filler material, however polysulfide organosilanes are not taught.

The Applicant has found that the use of polyepihalohydrin rubber in the body ply skim compound allows to significantly reduce the thickness of the innerliner. In fact, the body ply skim layer in this case can at least partially compensate for the impermeability functions of the innerliner layer.

The body ply skim is the covering rubber for the reinforcing plies and is made of a thermoplastic material (such as nylon, rayon, polyester, aramid). The reinforcing plies are commonly used as reinforcement material in the carcass, and the body ply skim, in relation to the plies of the carcass, is generally in direct contact with the innerliner layer.

The compound made by the Applicant, in addition to ensuring the required levels of impermeability, also ensures the necessary adhesion characteristics in relation to the plies.

One of the problems that normally affects rubber compounds is with regards to the early vulcanization thereof. As it may be clear to a person skilled in the art, early compound vulcanization, even if partial, compromises the correct processing of the compounds and thus the production of the corresponding rubber product. In the rubber industry this type of phenomenon is referred to using the English wording "scorch time".

The purpose of the present invention is to provide a body ply skim compound comprising polyepihalohydrin which does not have the problem of a low scorch time and, therefore, early vulcanization.

The inventor of the present invention has surprisingly found that the addition of a silane compound, of the polysulfide silane class, has a retardant effect in terms of the scorch time without altering in any way the other characteristics of the compound.

The object of the present invention is a rubber compound for the body ply skim comprising a cross-linkable unsaturated chain polymeric base comprising polyepihalohydrin rubber, a filler material and a vulcanization system; said body ply skim compound is indeed characterized in that it comprises between 0.25 and 2.50 phr of a silane compound belonging to the class of polysulfide organosilanes; said body ply skim compound being free of silica.

Here and hereinafter, the term "cross-linkable unsaturated chain polymeric base" refers to any natural or synthetic non-cross-linked polymer capable of assuming all of the chemical-physical and mechanical characteristics typically assumed by elastomers upon cross-linking (vulcanization) with sulfur-based systems.

Here and hereinafter, the term vulcanization system refers to a combination of vulcanizing agents, for example sulfur, and accelerating compounds that in the preparation of the compound are added during a final compounding step and that have the purpose of promoting the polymeric base vulcanization once the compound is subjected to a vulcanization temperature.

Preferably, the amount of said silane compound belonging to the class of organosilane polysulfides is contained within said rubber compound in a quantity of between 0.5 and 1.5 phr.

The silane compound belonging to the class of polysulfide organosilanes can be added to the master compound, together with said vulcanization system, i.e., during a final mixing step.

Preferably, the silane compound, belonging to the class of polysulfide organosilanes, is selected from bis(triethoxysilylpropyl)tetrasulfide and bis(triethoxysilylpropyl)disulfide.

Preferably, said cross-linkable unsaturated chain polymeric base is comprised of between 70 and 90 phr of said polyepihalohydrin rubber, between 5 and 25 of an epoxidized natural rubber (E-NR), and between 5 and 25 of a natural rubber (NR), the ratio between the E-NR and the NR being of between 0.2 and 5.0 phr.

The quantities are expressed in phr, i.e., in parts per 100 parts of rubber, wherein rubber refers to the complex consisting of polyepihalohydrin, E-NR and NR.

Preferably, the ratio in phr between the E-NR and the NR is comprised of between 1.0 and 3.0.

Preferably, the polyepihalohydrin rubber is a rubber deriving from the epichlorohydrin homopolymer or else from the epichlorohydrin/allyl-glycidyl ether copolymer or from the epichlorohydrin/ethylene oxide copolymer or else from the epichlorohydrin/ethylene oxide/ allyl-glycidyl ether terpolymer.

Preferably, the rubber compound, the object of the present invention, comprises up to 40.0 phr of an inert material with a laminated structure.

Preferably, said inert laminated structure material has a diameter of between 0.2 and 2 mm and an aspect ratio of between 5 and 30, preferably between 8 and 20.

Preferably, said inert laminated structure material is included within the group comprising kaolin, clay, mica, feldspar, graphite, bentonite and alumina.

A further object of the present invention is a body ply skim portion made using the compound of the present invention.

Yet another object of the present invention is a pneumatic tyre comprising a body ply skim portion made by using the compound of the present invention.

Yet another object of the invention is the use of a silane compound belonging to the class of polysulfide organosilanes as a vulcanization retarder in rubber compounds with a cross-linkable unsaturated chain polymeric base comprising polyepihalohydrin rubber, free of silica and intended for the preparation of a portion of body ply skim.

Preferably, said use anticipates that said silane compound, belonging to the class of polysulfide organosilanes, is added to said rubber compound in an amount of between 0.25 and 2.5 phr, preferably between 0.5 and 1.5 phr.

Preferably, said use anticipates that the silane compound, belonging to the class of polysulfide organosilanes, is selected from bis(triethoxysilylpropyl)tetrasulfide and bis(triethoxysilylpropyl)disulfide.

For a better understanding of the invention, the following examples are for illustrative and non-limiting purposes.

### EXAMPLES

Seven body ply skim compounds were produced: wherein the first (Comp. 1) comprises an example for comparison wherein the use of the silane compound, belonging to the class of polysulfide organosilanes, is not envisaged, whilst the other six compounds (A - F) comprise examples of the invention that differ therebetween as regards the type and quantity of the silane compound used.

### Preparation of the compounds

The compounds were produced according to the procedure given below.

### (1^{st} mixing step)

Before the start of the mixing, a mixer with tangential rotors (commonly called Banbury) and an internal volume of between 230 and 270 liters was loaded with the polymer bases, the reinforcing filler, the filler material, and, where required, the silane compound belonging to the class of polysulfide organosilanes, reaching a fill factor of 66-72%.

The mixer was operated at a speed of between 40-60 revolutions/minute, and the mixture thus formed was discharged once a temperature of between 140-160°C had been reached.

### (2^{nd} mixing step)

The vulcanization system was added to the compound obtained from the previous step, reaching a fill factor of between 63-67%.

The mixer was operated at a speed of between 20-40 revolutions/minute, and the mixture thus formed was discharged once a temperature of between 100-110°C had been reached.

### Composition of the compounds

Tables I and II list the compositions in phr of the seven compounds described above.

**TABLE I**

| | Comp. 1 | A | B | C |
|---|---|---|---|---|
| NR | 15 | | | |
| E-NR | 15 | | | |
| Polyepihalohydrin rubber | 70 | | | |
| CB | 40 | | | |
| Laminated clay | 10 | | | |
| Sulfur | 2 | | | |
| MBTS | 0.2 | | | |
| TBBS | 0.8 | | | |
| SI69 | -- | 0.5 | 1.0 | 1.5 |

**TABLE II**

| | D | E | F |
|---|---|---|---|
| NR | 15 | | |
| E-NR | 15 | | |
| Polyepihalohydrin rubber | 70 | | |
| CB | 40 | | |
| Laminated clay | 10 | | |
| Sulfur | 2 | | |
| MBTS | 0.2 | | |
| TBBS | 0.8 | | |
| SI75 | 0.5 | 1.0 | 1.5 |

NR stands for natural rubber that is made of a polymer base composed of natural origin cis-1,4-polyisoprene.

E-NR stands for epoxidized natural rubber, presenting a degree of epoxidation of 25%.

The polyepihalohydrin rubber used is a rubber derived from the epichlorohydrin/ethylene oxide/allyl-glycidyl ether terpolymer marketed as T3000 by the company ZEON.

CB stands for carbon black belonging to the class N6.

The laminated clay used is a mineral filler produced and marketed by BASF as ASP^{®} NC X-1.

MBTS is the acronym for mercaptobenzothiazole disulfide used as a vulcanization accelerator.

TBBS is the acronym for N-tert-butyl-2-benzothiazole sulfenamide used as a vulcanization accelerator.

SI69 is the trade name of the silane compound belonging to the class of polysulfide organosilanes and to (CH₃CH₂O)₃Si(CH₂)₃S₄(CH₂)₃Si(OCH₂CH₃)₃

SI75 is the trade name of the silane compound belonging to the class of polysulfide organosilanes and to (CH₃CH₂O)₃Si(CH₂)₃S₂(CH₂)₃Si(OCH₂CH₃)₃

### Laboratory test results

In order to evaluate the rheometric, mechanical and dynamic mechanical properties thereof, respective samples were prepared from the compounds of Table I and subjected to a series of tests.

In particular, the rheometric properties were measured according to the ASTM D6204 standard; the mechanical properties were measured according to the ASTM D412C standard; the dynamic mechanical properties were measured according to the ISO 4664 standard.

Furthermore, the samples were subjected to a ply-rubber adhesion evaluation test to verify whether the solution provided by the present invention affects this property. The adhesion of the compounds to the reinforcing ply was estimated as a percentage of the ply that was still covered with rubber following the separation of the two parts of the ply-rubber composite by means of the application of a load. The ply used in the text is made of PET.

Tables III and IV list the results relating to the tests described above.

**Table III**

| | Comp. | A | B | C |
|---|---|---|---|---|
| ML (dNm) | 2.6 | 2.7 | 2.7 | 2.6 |
| MH (dNm) | 11.8 | 12.1 | 10.8 | 11.7 |
| t'10 (min) | 1.7 | 1.8 | 2.0 | 2.2 |
| t'50 (min) | 3.7 | 3.9 | 4.2 | 4.5 |
| t'90 (min) | 8.4 | 9.5 | 11.0 | 11.7 |
| Mooney Scorch Time (min) | 12.3 | 14.2 | 15.8 | 17.2 |
| TB (Mpa) | 12.4 | 12.1 | 12.4 | 12.5 |
| M300% (Mpa) | 7.3 | 7.9 | 7.2 | 7.9 |
| EB (%) | 525 | 505 | 525 | 500 |
| Ply-rubber adhesion (cord covering %) | 100 | 100 | 100 | 100 |
| E'Mpa (1.0) | 10.5 | 10.2 | 9.9 | 10.8 |
| Tan Delta | 0.329 | 0.324 | 0.332 | 0.329 |

**Table IV**

| | D | E | F |
|---|---|---|---|
| ML (dNm) | 2.7 | 2.6 | 2.6 |
| MH (dNm) | 11.5 | 11.1 | 10.3 |
| t'10 (min) | 1.9 | 2.0 | 2.1 |
| t'50 (min) | 3.9 | 4.1 | 4.3 |
| t'90 (min) | 9.1 | 10.3 | 10.6 |
| Mooney Scorch Time (min) | 14.0 | 16.0 | 17.6 |
| TB (Mpa) | 12.2 | 11.6 | 10.8 |
| M300% (Mpa) | 7.4 | 7.6 | 6.7 |
| EB (%) | 520 | 485 | 510 |
| Ply-rubber adhesion (cord covering %) | 100 | 100 | 100 |
| E'Mpa (1.0) | 10.2 | 10.4 | 9.2 |
| Tan Delta | 0.306 | 0.287 | 0.303 |

According to the data reported in Tables III and IV, whilst maintaining the mechanical and dynamomechanical properties thereof substantially unchanged, the compounds produced according to the present invention (A - F), with respect to the compound used for comparison, have a higher scorch time.

This evidence shows that the use of the silane compound belonging to the class of polysulphide organosilanes only influences the scorch time, but does not alter the other properties of the compound.

It was found that the presence of the polyepihalohydrin rubber and the absence of silica were two necessary conditions for the silane compound, belonging to the class of polysulfide organosilanes, to perform the retarding action thereof.

In conclusion, the inventor of the present invention has surprisingly found that in compounds comprising polyepihalohydrin rubber, the use of a silane compound, belonging to the class of polysulfide organosilanes, has a vulcanization retarding effect without altering the other properties of the compound or creating any type of problem.

## Claims

1. A body ply skim rubber compound comprising a cross-linkable unsaturated chain polymeric base comprising polyepihalohydrin rubber, a filler material and a vulcanization system; said body ply skim compound being **characterized in that** it is comprised of between 0.25 and 2.50 phr of a silane compound, belonging to the class of polysulfide organosilanes; said body ply skim compound being free of silica.

2. A body ply skim rubber compound according to claim 1, **characterized in that** said silane compound, belonging to the class of polysulfide organosilanes, is included in said rubber compound in a quantity of between 0.5 and 1.5 phr.

3. A body ply skim rubber compound according to claim 1, **characterized in that** said silane compound, belonging to the class of polysulfide organosilanes, is added to the compound together with said vulcanization system.

4. A body ply skim rubber compound according to one of the preceding claims, **characterized in that** said silane compound, belonging to the class of polysulfide organosilanes, is selected from bis(triethoxysilylpropyl)tetrasulfide and bis(triethoxysilylpropyl)disulfide.

5. A body ply skim rubber compound according to one of the preceding claims, **characterized in that** said polyepihalohydrin is a rubber deriving from the epichlorohydrin homopolymer, or from the epichlorohydrin/allyl-glycidyl ether copolymer, or from epichlorohydrin/ethylene oxide copolymer, or from the epichlorohydrin/ethylene oxide/allyl-glycidyl ether terpolymer.

6. A body ply skim portion, **characterized in that** it is manufactured using a compound according to one of the preceding claims.

7. A pneumatic tyre **characterized in that** it comprises a body ply skim portion according to claim 6.

8. Use of a silane compound, belonging to the class of polysulfide organosilanes, as a vulcanization retarder in rubber compounds with a cross-linkable unsaturated chain polymeric base comprising polyepihalohydrin rubber, free of silica and intended for the preparation of a portion of body ply skim.

9. Use according to claim 8, **characterized in that** said silane compound, belonging to the class of polysulfide organosilanes, is added to said rubber compound in a quantity of between 0.25 and 2.5 phr.

10. Use according to claims 8 or 9, **characterized in that** said silane compound, belonging to the class of polysulfide organosilanes, is selected from bis(triethoxysilylpropyl)tetrasulfide and bis(triethoxysilylpropyl)disulfide.

## Patentansprüche

1. Karkassenlagenskimgummimischung, umfassend eine vernetzbare Polymerbasis mit ungesättigter Kette, umfassend Polyepihalohydringummi, ein Füllstoffmaterial, und ein Vulkanisationssystem; wobei die Karkassenlagenskimmischung **dadurch gekennzeichnet ist, dass** sie zu zwischen 0,25 und 2,50 phr aus einer Silanmischung besteht, die zu der Klasse von Polysulfidorganosilanen gehört; wobei die Karkassenlagenskimmischung frei von Kieselerde ist.

2. Karkassenlagenskimgummimischung nach Anspruch 1,
**dadurch gekennzeichnet, dass** die Silanmischung, die zu der Klasse von Polysulfidorganosilanen gehört, in der Gummimischung in einer Menge zwischen 0,5 und 1,5 phr eingeschlossen ist.

3. Karkassenlagenskimgummimischung nach Anspruch 1,
**dadurch gekennzeichnet, dass** die Silanmischung, die zu der Klasse von Polysulfidorganosilanen gehört, der Mischung zusammen mit dem Vulkanisationssystem zugesetzt wird.

4. Karkassenlagenskimgummimischung nach einem der vorstehenden Ansprüche, **dadurch gekennzeichnet, dass** die Silanmischung, die zu der Klasse von Polysulfidorganosilanen gehört, aus Bis(triethoxysilylpropyl)tetrasulfid und Bis(triethoxysilylpropyl)disulfid ausgewählt ist.

5. Karkassenlagenskimgummimischung nach einem der vorstehenden Ansprüche, **dadurch gekennzeichnet, dass** das Polyepihalohydrin ein Gummi ist, das von dem Epichlorhydrin-Homopolymer oder von dem Epichlorhydrin/Allylglycidylether-Copolymer oder von Epichlorhydrin/Ethylenoxid-Copolymer oder von dem Epichlorhydrin/Ethylenoxid/Allylglycidylether-Terpolymer abgeleitet ist.

6. Karkassenlagenskimabschnitt, **dadurch gekennzeichnet, dass** er unter Verwendung einer Mischung nach einem der vorstehenden Ansprüche gefertigt ist.

7. Luftreifen, **dadurch gekennzeichnet, dass** er einen Karkassenlagenskimabschnitt nach Anspruch 6 umfasst.

8. Verwendung einer Silanmischung, die zu der Klasse von Polysulfidorganosilanen gehört, als ein Vulkanisationsverzögerer in Gummimischungen mit einer vernetzbaren Polymerbasis mit ungesättigter Kette, umfassend Polyepihalohydringummi, frei von Kieselerde und für die Herstellung eines Abschnitts des Karkassenlagenskims bestimmt ist.

9. Verwendung nach Anspruch 8, **dadurch gekennzeichnet, dass** die Silanmischung, die zu der Klasse von Polysulfidorganosilanen gehört, der Gummimischung in einer Menge zwischen 0,25 und 2,5 phr zugesetzt wird.

10. Verwendung nach Anspruch 8 oder 9, **dadurch gekennzeichnet, dass** die Silanmischung, die zu der Klasse von Polysulfidorganosilanen gehört, aus Bis(triethoxysilylpropyl)tetrasulfid und Bis(triethoxysilylpropyl)disulfid ausgewählt ist.

## Revendications

1. Composé de caoutchouc pour l'écrémage de la nappe carcasse comprenant une base polymère à chaîne insaturée réticulable comprenant un caoutchouc polyépihalohydrine, un matériau d'apport et un système de vulcanisation ; ledit composé d'écrémage de la nappe carcasse étant **caractérisé en ce qu'**il est compris entre 0,25 et 2,50 phr d'un composé silane, appartenant à la classe des organosilanes polysulfurés ; ledit composé d'écrémage de la nappe carcasse étant dépourvu de silice.

2. Composé de caoutchouc pour l'écrémage de la nappe carcasse selon la revendication 1, **caractérisé en ce que** ledit composé silane, appartenant à la classe des organosilanes polysulfurés, est compris dans ledit mélange de caoutchouc en une quantité comprise entre 0,5 et 1,5 phr.

3. Composé de caoutchouc pour l'écrémage de la nappe carcasse selon la revendication 1, **caractérisé en ce que** ledit composé silane, appartenant à la classe des organosilanes polysulfurés, est ajouté au composé conjointement avec ledit système de vulcanisation.

4. Composé de caoutchouc pour l'écrémage de la nappe carcasse selon l'une des revendications précédentes, **caractérisé en ce que** ledit composé silane, appartenant à la classe des organosilanes polysulfurés, est choisi parmi le bis(triéthoxysilylpropyle) tétrasulfure et le bis(triéthoxysilylpropyle) disulfure.

5. Composé de caoutchouc pour l'écrémage de la nappe carcasse selon l'une des revendications précédentes, **caractérisé en ce que** ledit caoutchouc polyépihalohydrine est un caoutchouc issu de l'homopolymère épichlorohydrine ou du copolymère épichlorohydrine/éther allylique-glycidylique ou du copolymère épichlorohydrine/oxyde d'éthylène ou du terpolymère épichlorohydrine/oxyde d'éthylène/éther allylique-glycidylique.

6. Partie d'écrémage de la nappe carcasse **caractérisée en ce qu'**elle est fabriquée à l'aide d'un composé selon l'une des revendications précédentes.

7. Pneumatique **caractérisé en ce qu'il** comprend une partie selon la revendication 6.

8. Utilisation d'un composé silane, appartenant à la classe des organosilanes polysulfurés, comme retardateur de vulcanisation dans des composés de caoutchouc à base de polymères à chaîne insaturée réticulable comprenant du caoutchouc polyépihalohydrine, exempt de silice et destiné à la préparation d'une partie de l'écrémage de la nappe carcasse.

9. Utilisation selon la revendication 8, **caractérisée en ce que** ledit composé de silane, appartenant à la classe des organosilanes polysulfurés, est ajouté audit composé de caoutchouc en une quantité comprise entre 0,25 et 2,5 phr.

10. Utilisation selon les revendications 8 ou 9, **caractérisée en ce que** ledit composé silane, appartenant à la classe des organosilanes polysulfurés, est choisi parmi le bis(triéthoxysilylpropyle) tétrasulfure et le de bis(triéthoxysilylpropyle) disulfure.
